Europäisches Patentamt

European Patent Office

Office européen des brevets

(19)

(11) Publication number: **0 275 185**
A2

(12) **EUROPEAN PATENT APPLICATION**

(21) Application number: 88300233.9

(22) Date of filing: 12.01.88

(51) Int. Cl.⁴: **H 02 G 3/04**
F 16 L 3/22

(30) Priority: 13.01.87 US 2899

(43) Date of publication of application:
20.07.88 Bulletin 88/29

(84) Designated Contracting States:
AT BE CH DE ES FR GB GR IT LI LU NL SE

(71) Applicant: Peled, Uri
Kibbutz Masada
D.N. Emek Hayarden (IL)

(72) Inventor: Peled, Uri
Kibbutz Masada
D.N. Emek Hayarden (IL)

(74) Representative: Meeks, Frank Burton et al
BREWER & SON 5-9 Quality Court Chancery Lane
London WC2A 1HT (GB)

(54) Load bearing support structure.

(57) A load-bearing support structure comprising a plurality of longitudinally extending support elements (1), a succession of cross-pieces (2), each provided with a succession of means (3) for locating the elements, which elements are respectively associated with the locating means and are supported by the cross-pieces, and coupling means (7) for joining together adjacent ends of the elements, wherein the number of the longitudinally extending elements (1) per structure is selectively variable between a maximum equalling the number of the element-locating means (3) in the cross-pieces (2), and a minimum of three.

Fig.1.

## Description

## LOAD BEARING SUPPORT STRUCTURE

This invention relates to a load-bearing support structure and is in particular, but not exclusively, concerned with load bearing structures of the kind used in industrial installations for the support of electric cables.

Such cable support structures, or, as they are usually referred to, cable support ladders have, in the past, generally been made of metal and this has given rise to serious problems of corrosion, especially when used in chemical plants, and also to problems of insulating safety. Some attempts have been made in the past to manufacture such structures or ladders of reinforced plastics materials but they have not proven to be commercially successful as an alternative to the existing metal structures, particularly in view of the requirement for such structures to be capable of ready variation of direction, angle, etc. Whilst this requirement can be readily met with metal structures, attempting to satisfy the requirement with structures formed of plastics material has involved the use of very expensive bonded junctions which, in addition to their high cost, are not always reliable in use.

It is an object of the present invention to provide a new and improved load-bearing support structure, particularly, but not exclusively, for use with electric cables, in which the above-referred disadvantages are substantially reduced or avoided. According to the present invention there is provided a load-bearing support structure comprising a plurality of longitudinally extending support elements, a plurality of cross-pieces, each provided with a plurality of means for locating said elements, in which each element is located by an associated one of said locating means and is supported by said cross-pieces, and coupling means for joining together adjacent ends of said elements, characterized in that the number of said longitudinally extending elements in the structure is selectively variable in the range between a maximum equal to the number of said element-locating means in said cross-pieces, and a minimum of three.

It is a characteristic feature of the support structure in accordance with the present invention that it can be readily adapted to support differing loads by varying the number of longitudinal support elements employed. Thus, if a particularly heavy load is to be supported, then an increased number of longitudinal support elements can be used, whilst if a relatively light load is to be supported, the number of longitudinall elements can be suitably reduced. It will therefore be readily seen that the support structure in accordance with the present invention constitutes a modular design which can be readily adapted for differing types of loads.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 is a schematic perspective view of a portion of a cable support structure in accordance with the invention;

Fig. 2 is a side elevation of a U-shaped cross piece forming part of the support structure shown in Fig. 1;

Fig. 3 is a side elevation of a longitudinal support element forming part of the support structure shown in Fig. 1;

Figs. 4a, 4b and 4c are cross-sectional views differing forms of support elements of the kind shown in Fig. 3;

Fig. 5 is a diagrammatic view of the insertion and retention of a support element as shown in Fig. 3 in a U-shaped cross-piece as shown in Fig. 2;

Figs. 6a, 6b, 6c and 6d are side views of coupling fittings for use in the support structure;

Fig. 7 is a cross-sectional view of such a coupling fitting with a support element inserted;

Fig. 8 is a perspective view of a composite cable support structure constructed with the elements shown in Figs. 1 through 7;

Fig. 9 illustrates the mode of supporting of a support structure, as shown with reference to Figs. 1 through 8, on a floor surface;

Fig. 10 shows a mode of supporting of a support structure, as shown in Figs. 1 through 8, on a wall surface;

Fig. 11 shows a mode of suspension of a structure, as shown with reference to Figs. 1 through 8, from a ceiling surface, and

Fig. 12 shows a pair of curves illustrating the required variation of span (distance between supported cross-pieces) with differing loads for structures having between three to twelve support rods.

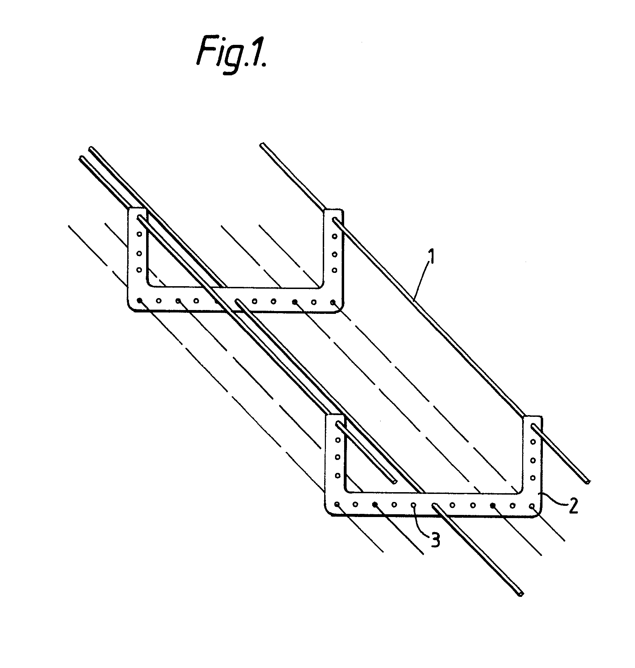

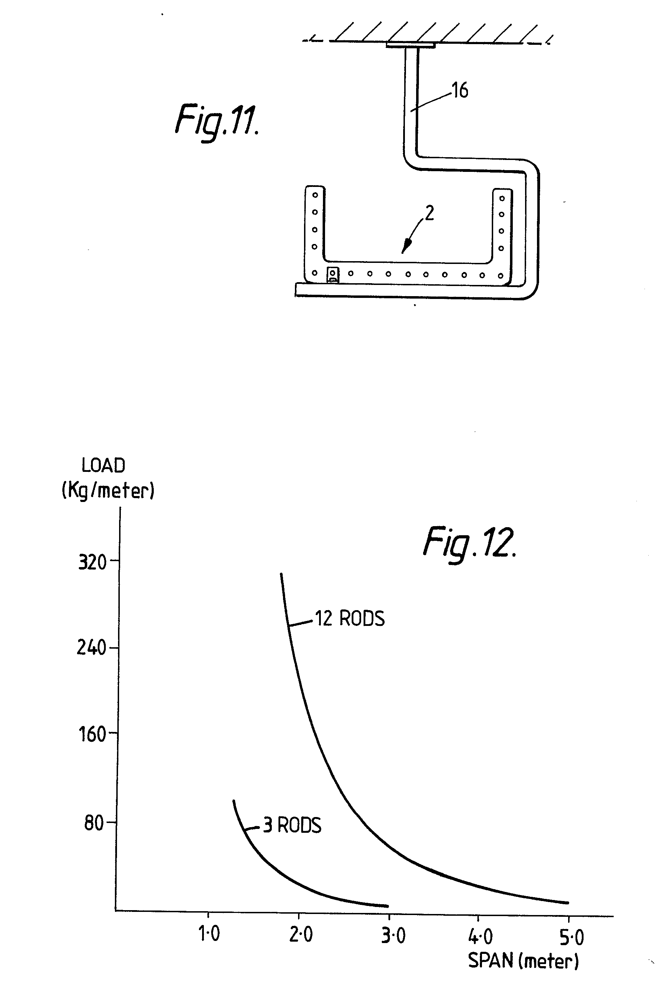

As seen in Fig. 1 of the drawings, a cable support structure consists of a plurality of longitudinally extending rods 1 (constituting support bearing elements) and a succession of U-shaped cross-pieces 2, each consisting of one web and two limb members. Each cross-piece has formed in its web and limb members through-going ports 3 into or through which the rods 1 extend. As can be seen from Fig. 1 of the drawings, the number of rods 1 which extend between successive cross-pieces 2 can be readily varied in accordance with the load which the structure is designed to bear (see also Fig. 12).

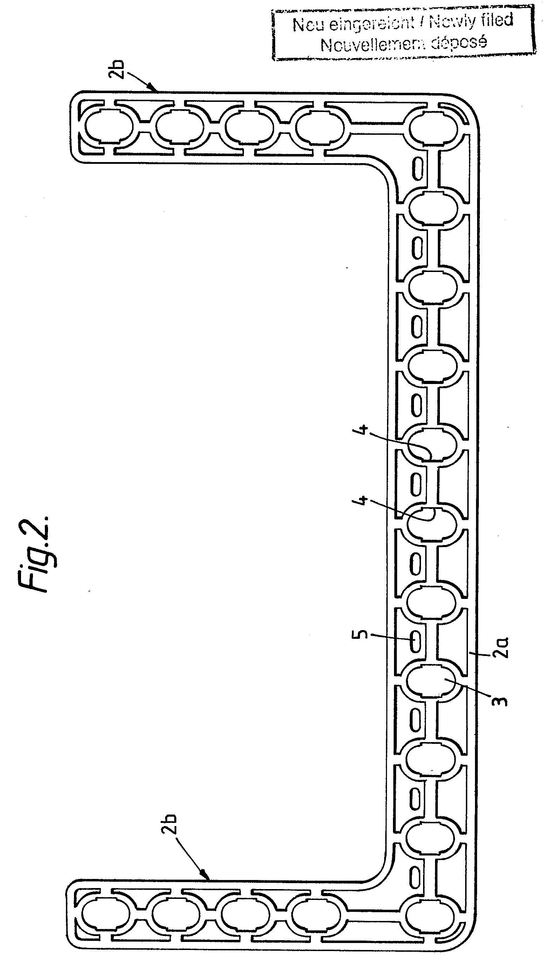

Reference will now be made to Figs. 2 through 4 of the drawings for a more detailed description of the load bearing rods 1 and cross-pieces 2.

As seen in Fig. 2 of the drawings, each U-shaped cross-piece 2 comprises a web member 2a and a pair of limb members 2b, there being formed in these members a succession of through-going ports 3. Each port 3, which is of substantially oval cross-sectional shape, is formed at opposite sides thereof with a pair of internal tapering recesses 4. The web member 2a is furthermore formed with a succession of through-going apertures 5.

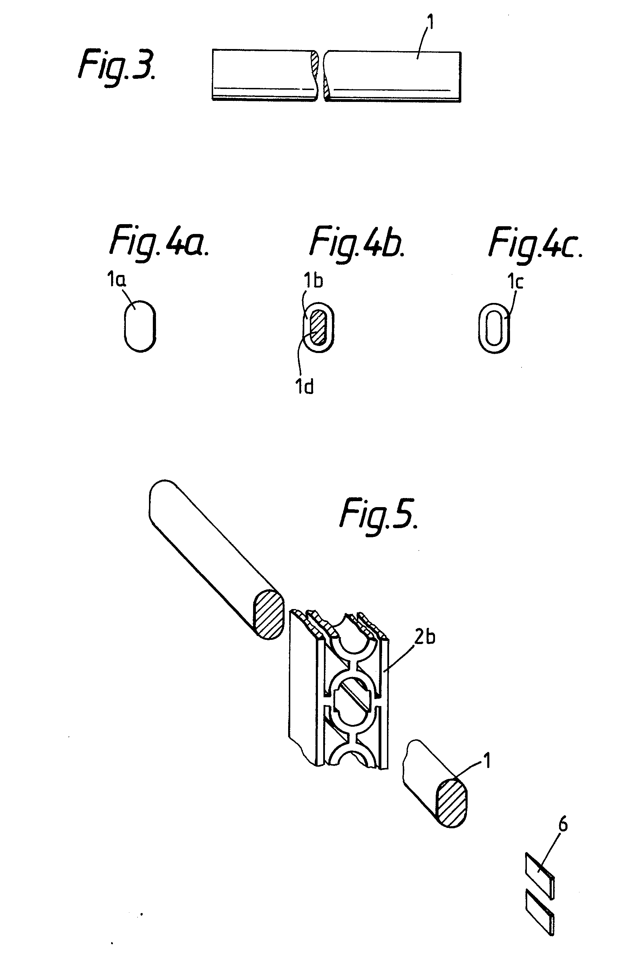

As seen in Figs. 3, 4 and 5 of the drawings, the longitudinal support rods 1 are of substantially oval cross-sectional shape and may have the form of solid rods 1a as shown in Figs. 4a, hollow rods 1c as shown in Fig. 4c, or hollow rods 1b with a filling core 1d, as shown in Fig. 4b.

The rods 1 themselves are formed of a reinforced plastics material advantageously of a continuous fiberglass strand material which has been passed through a resin bath and pulled through an appropriate die by a pultrusion technique. Where, as shown in Fig. 4b, the rod 1b is formed with an appropriate core 1d, the latter can suitably be of polyvinyl chloride material.

As can be seen clearly in Fig. 5 of the drawings, the rod 1 passes through the port 3 and is locked in position by means of a pair of wedge-shaped locking pieces 6 which are inserted into the tapering recesses 4, thereby preventing relative movement of the rod and the cross-piece.

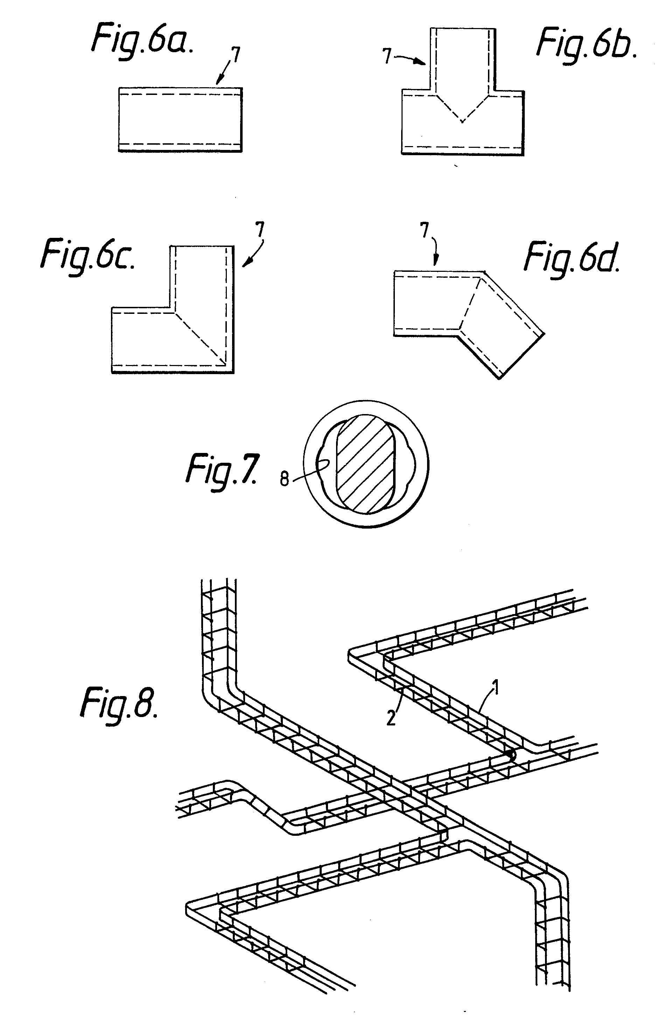

The rods can be coupled together by sleeve-like fittings 7 as shown in Figs. 6 and 7 of the drawings. There are seen straight (Fig. 6a), T-(Fig. 6b), elbow (Fig. 6c) and angular fittings (Fig. 6d), to be used according to the desired relative positions of adjacent rods 1.

Fig. 7 shows the cross-sectional shape of any of the fittings 7 shown in Figs. 6a through 6d. As can be seen, the rod fits into this fitting, which is formed on either side of the space occupied by the rod with a tapering recess 8 into which can be fitted wedge-like locking elements (not shown) for the locking of the rod ends in the fitting 7 in a manner similar to the locking of the rods 1 within the ports 3 of the cross-pieces 2.

It will be readily seen that with the basic elements just described, i.e., the support rods 1, the cross-piece 2 and the differing forms of coupling fittings shown in Figs. 6a to 6d, composite structures can be built on a modular basis wherein the component structural elements can be directed in any desired fashion and at any desired angle and elevation. Such a composite structure is diagrammatically illustrated in Fig. 8 of the drawings.

When the structure thus formed is used to support cables (not shown), the latter can be retained in the desired position by being tied to the cross-pieces by tying means (not shown) which pass through the apertures 5 of the latter (Fig. 2).

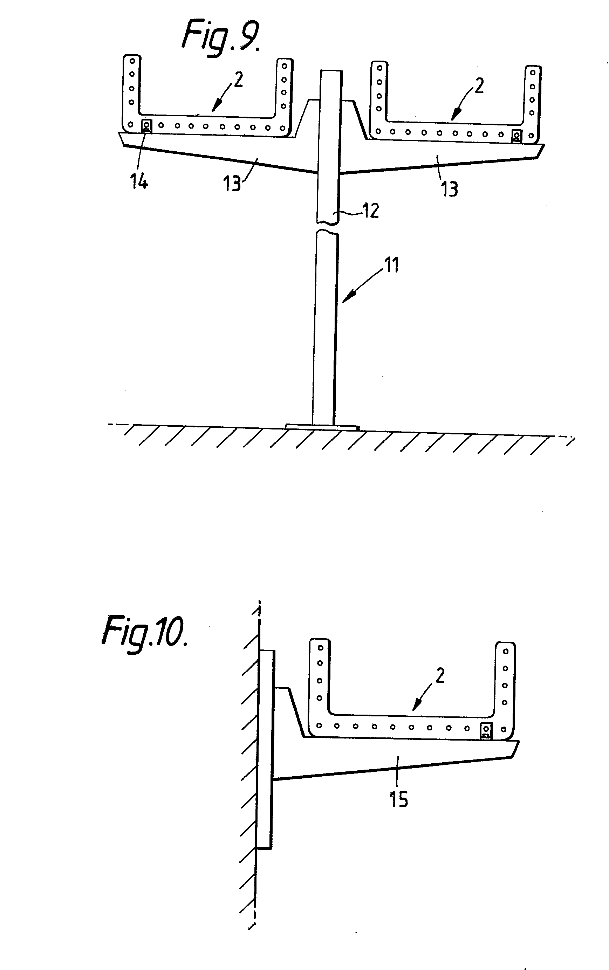

The cable support structure just described can be readily supported from a floor as shown in Fig. 9 of the drawings. In this construction, there is seen a succession of support units 11 each comprising a support pillar 12, each pillar having a pair of support arms, 13. Each support arm 13 is designed to support a support structure with the cross-pieces 2 thereof secured by securing means 14 to the support arms 13. Preferably, the cross-pieces 2 can be moulded with suitable means allowing for the ready securing by bolting to the support unit 11.

In an alternative construction shown in Fig. 10 of the drawings, at least some cross-pieces 2 are supported by support brackets 15 which, in their turn, are secured to a wall.

In a still further alternative construction shown in Fig. 11 of the drawings, at least some cross-pieces 2 are supported on hangers 16 which are suspended from a ceiling.

It will be readily seen that, with the cable support structure as just described, a very versatile modular structure is provided which can be easily adapted for differing needs, sizes and locations. Thus, the structure lends itself to follow the region wherein it is to be installed by the choice of appropriate lengths of support rods and by the choice between a very limited number of coupling fittings. Furthermore, and particularly, the cable support structure is especially useful for supporting differing loads of cables within a relatively limited range of spans by mere variation of the number of longitudinal support rods employed. Thus, where a relatively light load is to be supported only a limited number of support rods need be employed, whilst where a relatively heavy load is to be supported the number of support rods employed can be suitably increased. This is a very distinct advantage over the prior-art construction, which had always to be designed so as to accommodate maximum loads.

Furthermore, by virtue of the fact that the cable support structure is formed of plastic material, it is inherently protected against corrosive effects of atmosphere and materials and provides inherent insulation against any breakdown of insulation.

In one characteristic construction, the support rods were formed of a polyester material reinforced with glass fibres and formed by a pultrusion technique, whilst the U-shaped cross-pieces were formed of polyethylene by an injection moulding technique. The fittings, on the other hand, were formed of PVS or PVC by an injection-moulding technique.

Fig. 12 shows how in a specific design of cable support structures in accordance with the invention and as just described, the spacing required between the supported cross-pieces (the span) varies as the load varies with between three to twelve support rods 1.

Whilst the invention as been specifically described in connection with the provision of a cable support platform, it will be readily understood that the principles underlying the present invention are readily applicable to the construction of other forms of support platforms.

It will be evident to those skilled in the art that the invention is not limited to the details of the foregoing illustrative embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A load-bearing support structure comprising a plurality of longitudinally extending support elements (1), a plurality of cross-pieces (2), each provided with a plurality of means (3) for locating said elements, in which each element is located by an associated one of said locating means and is supported by said cross-pieces, and coupling means (7) for joining together adjacent ends of said elements, characterized in that the number of said longitudinally extending elements (1) in the structure is selectively variable in the range between a maximum equal to the number of said element-locating means (3) in said cross-pieces (2), and a minimum of three.

2. A support structure according to claim 1 characterized in that said elements (1) are formed of a reinforced plastics material.

3. A support structure according to claim 2, characterized in that said elements (1) are formed of a continuous strand of fiberglass reinforced plastics material.

4. A support structure according to any preceding claim, characterized in that each cross-piece (2) is formed with a plurality of through-going ports (3), constituting said locating means into or through which said elements (1) extend.

5. A support structure according to claim 4, characterized in that each port (3) is associated with element locking means (6) for retaining an element in its respective port (3).

6. A support structure according to claim 5, characterized in that each port (3) is formed in the walls thereof with at least one tapering recess (4) adapted to receive at least one locking wedge (6) constituting said locking means.

7. A support structure according to any preceding claim, characterized in that said elements (1) are of substantially oval cross-section.

8. A support structure according to any preceding claim, characterized in that said coupling means (7) has the form of sleeve-like fittings of selected configurations, each fitting being adapted to receive at least the end portions of the elements (1) to be coupled as well as locking means for locking said portions within said sleeve-like fitting.

9. A support structure according to claim 8, characterized in that said configurations include straight, T, elbow and angular configurations.

10. A support structure according to claim 8 or 9, characterized in that each sleeve-like fitting is formed with at least one internal tapering recess adapted to receive at least one locking wedge.

11. A support structure according to claim 4, characterized in that said cross-piece (2) is substantially U-shaped, having two limb members (2b) and one web number (2a), said ports (3) being formed in at least two of said members.

12. A support structure according to claim 11, characterized in that each web member (2a) is formed with means (5) for securing in position objects supported by said structure.

13. A support structure according to claim 12, characterized in that said means (5) for securing in position comprise apertures formed in said web member (2a), through which apertures pass means for tying said objects in position.

14. A support structure according to claim 11, characterized in that at least some of the cross-pieces (2) are integrally-formed with means allowing for the support thereof on a base surface.

Fig.1.

# Fig.2.

2b

2b

5 4 4

3 2a

Fig.3.

Fig.4a.    Fig.4b.    Fig.4c.

1a         1b         1c

1d

Fig.5.

2b

1

6

Fig.6a.

7

Fig.6b.

7

Fig.6c.

7

7

Fig.6d.

Fig.7.

8

Fig.8.

1

2

*Fig.9.*

2

14    13    13

12

11

*Fig.10.*

2

15

*Fig.11.*

16

2

*Fig.12.*

LOAD
(Kg/meter)

320

240

160

80

12 RODS

3 RODS

1·0    2·0    3·0    4·0    5·0
SPAN (meter)